# EUROPÄISCHE PATENTSCHRIFT

(11) **EP 2 200 898 B1**
(45) Veröffentlichungstag und Bekanntmachung des Hinweises auf die Patenterteilung: **22.10.2014**
(21) Anmeldenummer: 08774065.0
(22) Anmeldetag: 11.06.2008
(51) Int. Cl.: F16L 3/00, B64C 1/10, B64C 1/00, B64C 1/06

(54) **STRUKTURBAUTEIL UND RUMPF EINES LUFT- ODER RAUMFAHRZEUGS**
STRUCTURAL COMPONENT AND FUSELAGE OF AN AIRCRAFT OR SPACECRAFT
COMPOSANT STRUCTUREL ET FUSELAGE D'ENGIN AÉROSPATIAL

(30) Priorität: 18.09.2007 DE 102007044389; 18.09.2007 US 994296 P
(43) Veröffentlichungstag der Anmeldung: 30.06.2010
(73) Patentinhaber: Airbus Operations GmbH, 21129 Hamburg (DE)
(72) Erfinder: GENSCH, Hinnik, 21635 Jork (DE); ROMING, Thorsten, 21709 Himmelpforten (DE)
(74) Vertreter: Isarpatent
(86) Internationale Anmeldenummer: PCT/EP2008/057272
(87) Internationale Veröffentlichungsnummer: WO 2009/037006

(56) Entgegenhaltungen:
- FR-A- 883 527
- US-A- 1 922 371
- US-A- 2 755 216
- US-A- 2 941 760
- US-A1- 2005 082 431

## Beschreibung

Die vorliegende Erfindung bezieht sich auf ein Strukturbauteil sowie auf einen Rumpf eines Luft- oder Raumfahrzeugs, welcher ein derartiges Strukturbauteil aufweist.

Ein wichtiger Aspekt im Flugzeugbau ist das ständige Bestreben, Gewicht einzusparen. Dies geschieht zum einen durch den Einsatz besonders leichter Materialien, wie z.B. CFK-Werkstoffen, zum anderen aber auch durch das Verwenden einer Grundstruktur, die eine große Flugsicherheit bzw. Festigkeit bei geringem Gewicht ermöglicht.

So ist in modernen Verkehrsflugzeugen die Grundstruktur des Rumpfes durch die Haut sowie Stringer und Spanten, welche zur Verstärkung bzw. Versteifung der Haut dienen, gebildet. Dabei verlaufen die Stringer im Allgemeinen in der Längsrichtung des Flugzeugrumpfes und die Spanten in umlaufender Richtung entlang des Innenumfangs der Haut. Diese Strukturbauteile bilden die Primärstruktur des Flugzeugs, in welche die Sekundärstrukturen, wie z.B. Triebwerke, Ausrüstungen, Verkablung usw., eingebaut werden.

Eine Verringerung der Anzahl der primären Strukturbauteile, wie z.B. Stringer oder Spanten, würde zwar zu einer Gewichtseinsparung führen, allerdings würde dies zu Lasten der Stabilität und somit der Flugsicherheit gehen.

In Dokument US 2005/0082431 A1, welches den nächstliegenden Stand der Technik darstellt und den Oberbegriff des Anspruchs 1 offenbart, wird ein tragendes Bauteil zur Versteifung der Haut eines Luft- oder Raumfahrzeugs, wie z.B. ein Stringer oder Spant, bereitgestellt, wobei dieses Bauteil als geschlossenes Profil (Hohlprofil) ausgebildet ist, so dass ein Systemmedium durch das Strukturbauteil geführt werden kann. Dabei dient das Hohlprofil selbst als Lasten tragendes Bauelement.

Die zugrunde liegende Idee besteht darin, Strukturbauteile in einem Luft- oder Raumfahrzeug mit einer doppelten Funktion zu versehen. Zum einen dient ein Strukturbauteil als Primärstruktur, nämlich als tragendes Bauteil zur Verstärkung des Rumpfes eines Luft- oder Raumfahrzeugs. Zum anderen dient es zur Führung eines Systemmediums zwischen einem Ausgangsort und einem Bestimmungsort im Flugzeug. Dies ermöglicht zum einen eine Gewichtseinsparung und zum anderen einen Raumgewinn, da die entsprechenden Systemleitungen eingespart werden können.

Die in US 2005/0082431 A1 gezeigte Lösung hat jedoch den Nachteil, dass eine freie Platzierung der Hohlprofile auf der Haut nicht möglich ist. Eine einfache Anpassung der Systemkomponenten ist somit nicht gegeben.

Es ist daher Aufgabe der vorliegenden Erfindung ein Strukturbauteil zu Verbessern, welches eine Gewichtseinsparung bei im Wesentlichen gleichbleibender Stabilität in einem Luft- oder Raumfahrzeug ermöglicht.

Erfindungsgemäß wird diese Aufgabe durch ein Strukturbauteil mit den Merkmalen des Patentanspruchs 1 gelöst.

Das Strukturbauteil weist dabei einen Aufnahmebock auf, mittels welchem das Strukturbauteil an der Haut befestigbar ist. Eine solche differenzielle Bauweise erleichtert Reparaturen, da es möglich ist, die einzelnen Komponenten des Strukturbauteils in einfacher Weise auszutauschen.

Dabei kann der Aufnahmebock einen Fußabschnitt, welcher an der Haut befestigbar ist, und einen Aufnahmeabschnitt, welcher zur Aufnahme des Hohlprofils ausgebildet ist, aufweisen. Ferner kann das Strukturbauteil einen Schellenbügel aufweisen, mittels welchem das Hohlprofil an dem Aufnahmebock befestigt ist.

In den Unteransprüchen finden sich vorteilhafte Ausgestaltungen und Verbesserungen der Erfindung.

Unter Strukturbauteil werden hierbei Lasten tragende Primärstrukturen verstanden, also solche Strukturen, welche dazu dienen, den Rumpf eines Luft- oder Raumfahrzeuges zu verstärken bzw. zu versteifen. Beispiele für solche Strukturbauteile sind Stringer und Spanten, insbesondere Ringspanten, aber auch Druckschotts.

Das Strukturbauteil kann an einer Innenseite einer Haut des Luft- bzw. Raumfahrzeugs befestigbar sein. Dies ermöglicht eine platzsparende Führung des Systemmediums entlang der Innenseite der Haut.

Das Hohlprofil weist bevorzugt eine Öffnung in radialer Richtung zum Ein- bzw. Herausführen des Systemmediums in das Hohlprofil auf. Unter "radialer Richtung" ist hierbei eine Richtung senkrecht zur Längsachse des Hohlprofils zu verstehen. Die Längsachse des Hohlprofils ist die Achse, entlang derer sich der Querschnitt des Hohlprofils nur unwesentlich bzw. nur graduell ändert.

In einer Weiterbildung der Erfindung ist in der Öffnung ein Adapter vorgesehen, an welchen eine das Systemmedium führende Leitung anschließbar ist. Somit kann eine das Systemmedium führende Leitung in einfacher Weise an das Hohlprofil angeschlossen und das Systemmedium ins Hohlprofil ein- bzw. herausgeleitet werden.

Das Systemmedium kann beispielsweise ein Gas, eine Flüssigkeit, eine elektrische Leitung oder ein Glasfaserkabel sein.

Das Hohlprofil kann aus einem Leichtmetall, beispielsweise aus Titan oder Aluminium, gefertigt sein. Es ist auch möglich, das Hohlprofil aus einem CFK-Verbundstoff zu fertigen. Auch der Aufnahmebock kann aus einem Leichtmetall, beispielsweise aus Titan oder Aluminium, oder aus einem CFK-Verbundstoff gefertigt sein.

Als Leichtmetall ist hierbei Titan aufgrund seiner Materialeigenschaften besonders günstig.

Das Hohlprofil kann einen im Wesentlichen kreisförmigen Querschnitt aufweisen. Dies kann insbesondere bei gasförmigen und flüssigen Systemmedien von Vorteil sein.

Ein erfindungsgemäßer Rumpf bzw. ein erfindungsgemäßes Flugwerk eines Luft- oder Raumfahrzeugs weist eine Haut und ein erfindungsgemäßes Strukturbauteil auf, welches an der Innenseite der Haut befestigt ist.

Die Erfindung wird im Folgenden anhand von Ausführungsbeispielen unter Bezugnahme auf die beiliegenden Figuren der Zeichnung näher erläutert.

Von den Figuren zeigen:
- Fig. 1: eine perspektivische Darstellung eines Strukturbauteils gemäß einer Ausführungsform der vorliegenden Erfindung;
- Fig. 2: einen Längsschnitt durch ein Strukturbauteils gemäß einer Ausführungsform der vorliegenden Erfindung entlang der Schnittlinie II-II in Fig. 1; und
- Fig. 3: einen Querschnitt durch das Strukturbauteil in Fig. 2 entlang der Schnittlinie III - III in Fig. 1.

In den Figuren bezeichnen dieselben Bezugszeichen gleiche oder funktionsgleiche Komponenten, soweit nichts Gegenteiliges angegeben ist.

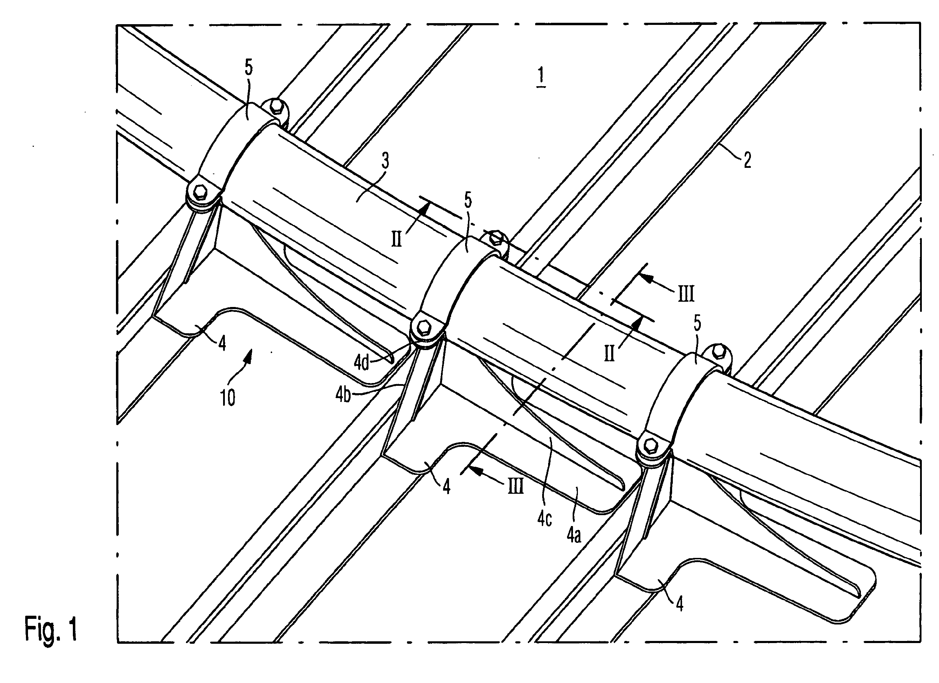

Im Folgenden wird ein Strukturbauteil gemäß einem Ausführungsbeispiel der Erfindung anhand der Figuren 1 bis 3 beschrieben.

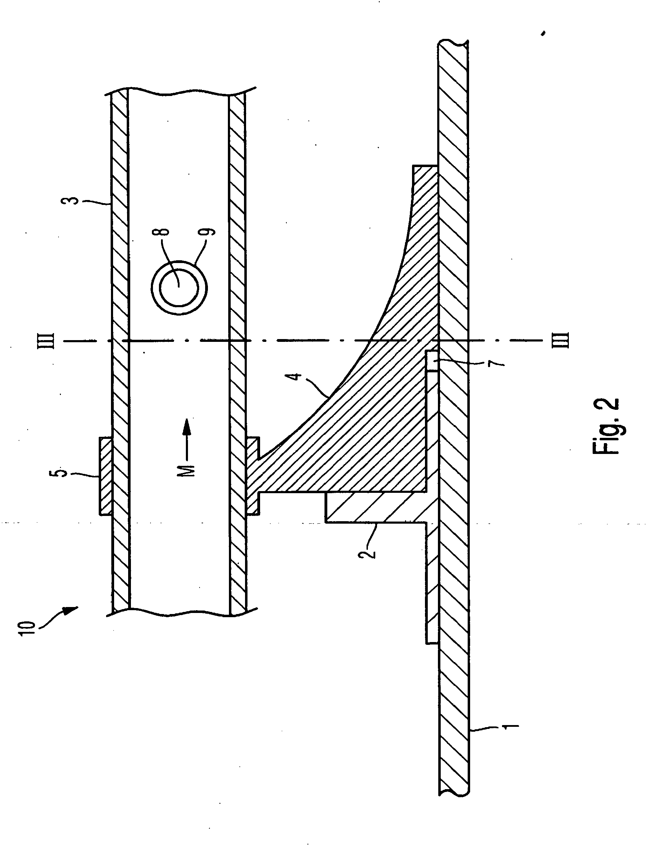

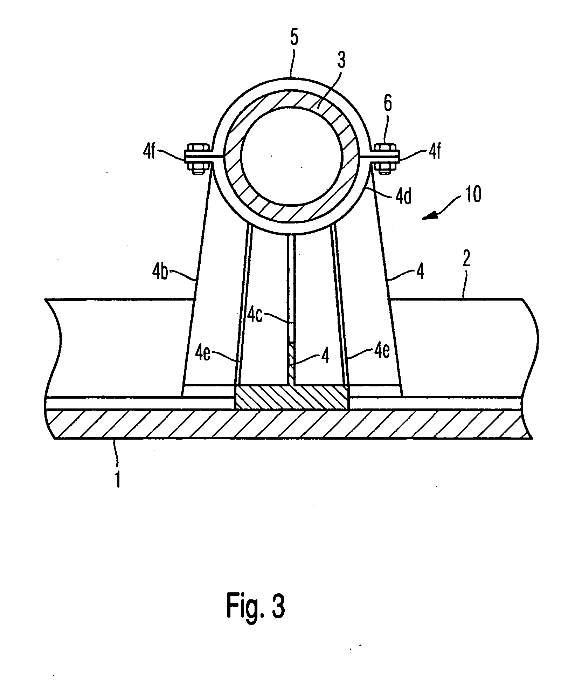

Fig. 1 ist eine perspektivische Darstellung eines Strukturbauteils 10. Fig. 2 zeigt einen Längsschnitt durch das Strukturbauteil 10 entlang der Schnittlinie II - II in Fig. 1 und Fig. 3 einen Querschnitt durch das Strukturbauteil 10 entlang der Schnittlinie III - III in Fig. 1.

Im in den Fign. 1 bis 3 dargestellten Beispiel ist das Strukturbauteil 10 als Spantbaugruppe zur Verstärkung bzw. Versteifung des Rumpfes eines Luft- oder Raumfahrzeugs ausgebildet und umfasst ein Hohlprofil 3, Aufnahmeböcke 4 sowie Schellenbügel 5.

Die Aufnahmeböcke 4 weisen jeweils einen Fußabschnitt 4a, einen Wandabschnitt 4b, eine Querrippe 4c sowie einen Aufnahmeabschnitt 4d auf. Der Fußabschnitt 4a ist aus einer im Wesentlichen T-förmigen Platte gebildet. Ein dem Wandabschnitt 4b gegenüberliegender Abschnitt am freien Ende der T-Form weist dabei eine größere Dicke auf als der dem Wandabschnitt 4b zugewandte Abschnitt, so dass an der Unterseite des Fußabschnitts 4a, wie in Fig. 2 dargestellt, eine Stufe ausgebildet ist. Die Länge des Fußabschnitts 4a kann beispielsweise etwa 100 mm und seine Breite beispielsweise etwa 80 mm betragen.

Der Wandabschnitt 4b erstreckt sich im Wesentlichen senkrecht zum Fußabschnitt 4a, und zwar vom oberen Ende des Querbalkens der T-Form des Fußabschnitts 4a. Der Wandabschnitt 4b hat, wie in Fig. 3 dargestellt ist in der Draufsicht eine trapezartige Form mit einer an den Fußabschnitt 4a angrenzenden Grundkante, zwei aufeinander zulaufenden Seitenkanten und einer gerundeten Oberkante. Der Wandabschnitt 4b ist mit zwei Rippen 4e versehen, welche als Verdickungen jeweils in etwa mittig zwischen der Querrippe 4c und den Seitenkanten 4b ausgebildet sind.

An die Oberkante des Wandabschnitts 4b schließt sich der Aufnahmeabschnitt 4d an. Der Aufnahmeabschnitt 4d ist hat im Wesentlichen die Form eines halben Hohlzylinders, dessen Innenradius mit dem Außenradius des Hohlprofils 3 übereinstimmt. An den beiden Enden des Aufnahmeabschnitts 4d ist jeweils ein Flansch 4f ausgebildet.

Die Querrippe 4c dient zur Stabilisierung des Aufnahmebocks 4 und ist senkrecht sowohl zum Fußabschnitt 4a als auch zum Aufnahmeabschnitt 4b ausgebildet. Die Querrippe 4c erstreckt sich entlang der gesamten Länge des Fußabschnitts 4a, wobei die Höhe der Querrippe 4c vom freien Ende des Fußabschnitts 4a zum Wandabschnitt 4b hin zunimmt. Die Oberkante der Querrippe 4c ist dabei leicht nach oben gebogen, was eine weitere Gewichtsersparnis ermöglicht. Es ist aber ebenso möglich, die Oberkante der Querrippe 4c gerade auszuführen.

Das Hohlprofil 3 ist im Aufnahmeabschnitt 4d des Aufnahmebocks 4 aufgenommen und mit einem Schellenbügel 5 darin befestigt. Der Schellenbügel 5 kann beispielsweise mit den Flanschen 4f mittels Schrauben 6 verschraubt werden. Somit kann das Hohlprofil 3 auf einfache Weise im Aufnahmebock 4 gesichert werden.

Der Aufnahmebock 4 kann an der Haut 1 des Flugzeugrumpfes befestigt werden. Typischerweise ist der Aufnahmebock 4 an den Rumpf genietet (nicht in den Fign. dargestellt), was eine hohe Festigkeit gewährleistet. Dazu wird der Fußabschnitt 4a auf die Haut 1 und einen Stringer 2 platziert und an Haut, Stringerfuß und Stringersteg fest genietet. Dabei liegt das Ende des Fußabschnitts 4a mit der größeren Dicke auf der Haut 1 auf und das dem Wandabschnitt 4b zugewandte Ende des Fußabschnitts 4a mit der geringern Dicke auf dem Stringer 2 auf. Der Wandabschnitt 4b liegt dabei am senkrechten Steg des Stringers 2 an.

Der Abstand vom Wandabschnitt 4b zur Stufe in der Unterseite des Fußabschnitts 4a ist größer als der Abstand vom Stringersteg zur Seitenkante des Stringers 2, so dass zwischen der Seitenkante des Stringers 2 und der Unterseite des Fußabschnitts 4a ein Hohlraum 7 gebildet wird. Somit wird eine gewisse Toleranz erreicht, die es ermöglicht, Ungenauigkeiten in der Dimensionierung des Stringers 2 auszugleichen.

Zur Befestigung des Hohlprofils am Rumpf des Flugzeugs können, wie in Fig. 1 dargestellt, mehrere Aufnahmeböcke 4 vorgesehen werden. Diese können umlaufend an der Innenseite des Rumpfes angeordnet werden und darin ein entlang der Innenseite des Rumpfes gebogenes Hohlprofil 3 als Ringspant aufnehmen. Das Hohlprofil 3 muss dabei nicht komplett die Innenseite des Rumpfes umlaufen, sondern kann auch in Form eines oder mehrerer Bogenabschnitte ausgeführt werden.

Vorteilhaft ist hierbei der differenzielle Aufbau, der es ermöglicht, die einzelnen Komponenten in einfacher Weise auszutauschen bzw. wiederzuverwenden. Ferner können die Aufnahmeböcke 4 entlang dem Hohlprofil 3 verschoben werden, was eine flexiblen Einsatz des Strukturbauteils in verschiedenen Umgebungen ermöglicht.

Das Hohlprofil 3 weist im dargestellten Ausführungsbeispiel einem im Wesentlichen kreisförmigen Querschnitt auf und kann einen Außendurchmesser von beispielsweise 40 mm aufweisen. Das Hohlprofil 3 ist zur Aufnahme mindestens eines Systemmediums M geeignet. Als Systemmedium werden hierbei Betriebsmittel (also Flüssigkeiten oder Gase), welche gezielt zu einem bestimmten Ort im Flugzeug geleitet werden, sowie Mittel zur Energie- oder Signalübertragung betrachtet. Beispiele für Systemmedien sind Gase, wie z.B. Sauerstoff und Luft, Flüssigkeiten, wie z.B. Wasser, Kraftstoff oder Öl, Hydraulikleitungen, Pneumatikleitungen, elektrische Leitungen, Lichtwellenleiter und dergleichen.

Das Systemmedium M kann im Hohlprofil 3 geführt werden. Beispielsweise kann es an einer ersten Stelle ins Hohlprofil 3 eingeführt werden und an einer zweiten Stelle, die um einen bestimmten Umlaufwinkel (z.B. 90° oder 180°) von der ersten Stelle beabstandet ist aus dem Hohlprofil 3 entnommen werden. Das Hohlprofil 3 erfüllt somit die Funktionen einer Primärstruktur (als tragendes Bauteil) sowie einer Sekundärstruktur (als Systemmedium führendes Bauteil). Folglich können Sekundärstrukturen, wie z.B. Kabelkanäle oder dergl., eingespart werden, so dass eine Gewichtseinsparung ermöglicht wird.

Bei einer Verwendung des Hohlprofils 3 zur Aufnahme eines Gases oder einer Flüssigkeit als Systemmedium ist es vorteilhaft, wenn das Hohlprofil 3 gasdicht bzw. flüssigkeitsdicht ausgebildet ist, um Lecks zu vermeiden.

Das Systemmedium M kann unmittelbar (also ohne zusätzliche Leitungen) im Hohlprofil 3 geführt werden. Es ist jedoch auch möglich, das Systemmedium M in einer Leitung durch das Hohlprofil 3 zu führen. In diesem Falle kann das Hohlprofil 3 eine zusätzliche Sicherungsfunktion erfüllen. Beispielsweise ist es denkbar, Kraftstoff in einer einwandigen Kraftstoffleitung durch das Hohlprofil 3 zu führen. Falls die Kraftstoffleitung undicht ist, so kann ein Auslecken des Kraftstoffs durch das Hohlprofil 3 verhindert werden. Anders ausgedrückt kann das Hohlprofil 3 die Funktion der äußeren Wand einer doppelwandigen Kraftstoffleitung erfüllen.

zum Einführen sowie zur Entnahme des Systemmediums können in Umlaufrichtung beabstandet voneinander Adapterstationen vorgesehen sein. Diese Adapterstationen sind im einfachsten Fall als Öffnungen 8 im Hohlprofil 3 ausgebildet. Es ist ferner möglich, in diese Öffnungen 8 einen Einsatz 9 einzusetzen.. Ein solcher Einsatz 9 kann beispielsweise als Gummimuffe ausgebildet sein, die als Kabelführung dient und somit durch das Hohlprofil 3 geführte Kabel vor Beschädigungen schützt. Weiterhin ist es möglich, den Einsatz 9 als Adapter auszubilden, an den eine ein Gas oder eine Flüssigkeit führende Leitung angeschlossen werden kann.

Ferner ist es möglich, an entgegen gesetzten Enden oder auch abschnittsweise Trennwände im Hohlprofil 3 vorzusehen, welche den Fluss von Gasen und Flüssigkeiten im Hohlprofil 3 begrenzen.

Sowohl das Hohlprofil 3 als auch der Aufnahmebock 4 sind typischerweise aus einem Leichtmetall, z.B. Titan oder Aluminium, gefertigt, können jedoch auch aus einem Kohlefaserverbundstoff gefertigt sein.

Das Hohlprofil 3 kann beispielsweise durch Strangpressen gefertigt werden. Der Aufnahmebock 4 kann beispielsweise als Gussstück oder Schmiedeteil gefertigt werden.

Obwohl die vorliegende Erfindung anhand bevorzugter Ausführungsbeispiele vorliegend beschrieben wurde, ist sie darauf nicht beschränkt, sondern auf vielfältige Weise modifizierbar.

Beispielsweise ist im.obigen Ausführungsbeispiel das Hohlprofil 3 mittels Aufnahmeböcken 4, welche die Funktion von Clips erfüllen, an der Haut 1 befestigt. Es ist allerdings ebenso möglich, das Hohlprofil 3 ohne Aufnahmeböcke direkt an der Haut 1 zu befestigen. Beispielsweise kann das Hohlprofil 3 mit Bügeln an der Haut 1 fest genietet werden.

Ferner weist das oben beschriebene Hohlprofil 3 einen im Wesentlichen kreisförmigen Querschnitt auf, was insbesondere für den Transport von flüssigen und gasförmigen Systemmedien vorteilhaft ist. Es ist jedoch ebenso möglich, das Hohlprofil mit einem anderen Querschnitt, beispielsweise einem rechteckigen Querschnitt zu versehen.

Ferner ist der Fußabschnitt 4a im oben beschriebenen Ausführungsbeispiel als T-förmige Platte ausgebildet, was mit einer Gewichtsersparnis verbunden ist, er kann jedoch ebenso auch als rechteckige Platte ausgebildet sein.

Das oben beschriebene Strukturbauteil wurde anhand einer Spantbaugruppe beschrieben. Die Erfindung ist jedoch nicht darauf beschränkt und kann ebenso auf andere Strukturbauteii.e, wie z.B. Stringer, Druckschotts und dergleichen angewandt werden.

Es wird ein tragendes Bauteil (10) zur Versteifung der Haut eines Luft- oder Raumfahrzeugs, wie z.B. ein Stringer oder Spant, bereitgestellt, wobei dieses Bauteil als geschlossenes Profil (Hohlprofil) (3) ausgebildet ist, so dass ein Systemmedium (M) durch das Strukturbauteil geführt werden kann. Dabei dient das Hohlprofil (3) selbst als Lasten tragendes Bauelement.

### Bezugszeichenliste

- 1: Haut
- 2: Steg
- 3: Hohlprofil
- 4: Aufnahmebock
- 4a: Fußabschnitt
- 4b: Wandabschnitt
- 4c: Querrippe
- 4d: Aufnahmeabschnitt
- 4e: Rippe
- 4f: Flansch
- 5: Schellenbügel
- 6: Schraube
- 7: Hohlraum
- 8: Öffnung
- 9: Einsatz
- 10: Strukturbauteil

## Patentansprüche

1. Strukturbauteil (10), welches als Lasten aufnehmendes Bauteil zur Versteifung einer Haut (1) eines Luft- oder Raumfahrzeugs ausgebildet ist,
wobei das Strukturbauteil (10) ein Hohlprofil (3) zur Aufnahme mindestens eines Systemmediums (M) aufweist, wobei
das Strukturbauteil (10) einen Aufnahmebock (4) aufweist, der einen Aufnahmeabschnitt (4d) aufweist welcher zur Aufnahme des Hohlprofils (3) ausgebildet ist **dadurch gekennzeichnet, dass** mittels des Aufnahmebocks das Strukturbauteil (10) an der Haut (1) befestigbar ist, wobei der Aufnahmebock (4) einen Fußabschnitt (4a), welcher auf der Haut (1) platzierbar und an der Haut (1) befestigbar ist aufweist.

2. Strukturbauteil (10) nach Anspruch 1,
**dadurch gekennzeichnet,**
**dass** das Strukturbauteil (10) als Spant, insbesondere Ringspant, als Stringer, Druckschott oder dergleichen ausgebildet ist.

3. Strukturbauteil (10) nach Anspruch 1 oder 2,
**dadurch gekennzeichnet,**
**dass** das Strukturbauteil (10) an einer Innenseite der Haut (1) des Luft- oder Raumfahrzeugs befestigbar ist.

4. Strukturbauteil (10) nach Anspruch 2 oder 3,
**dadurch gekennzeichnet,**
**dass** das Strukturbauteil (10) ferner einen Schellenbügel (5) aufweist, mittels welchem das Hohlprofil (3) an dem Aufnahmebock (4) befestigt ist.

5. Strukturbauteil (10) nach einem der Ansprüche 2 bis 4,
**dadurch gekennzeichnet,**
**dass** der Aufnahmebock (4) aus Titan gefertigt ist.

6. Strukturbauteil (10) nach wenigstens einem der vorhergehenden Ansprüche,
**dadurch gekennzeichnet,**
**dass** das Hohlprofil (3) eine Öffnung (8) in radialer Richtung zum Ein- bzw. Herausführen des Systemmediums (M) in das bzw. aus dem Hohlprofil (3) aufweist.

7. Strukturbauteil (10) nach Anspruch 6,
**dadurch gekennzeichnet,**
**dass** in der Öffnung (8) ein Adapter (9) vorgesehen ist, an welchen eine das Systemmedium (M) führende Leitung anschließbar ist.

8. Strukturbauteil (10) nach wenigstens einem der vorhergehenden Ansprüche,
**dadurch gekennzeichnet,**
**dass** das Systemmedium (M) ein Gas, eine Flüssigkeit, eine elektrische Leitung, ein Glasfaserkabel oder dergleichen.

9. Strukturbauteil (10) nach wenigstens einem der vorhergehenden Ansprüche,
**dadurch gekennzeichnet,**
**dass** das Hohlprofil (3) aus Titan gefertigt ist.

10. Strukturbauteil (10) nach wenigstens einem der vorhergehenden Ansprüche,
**dadurch gekennzeichnet,**
**dass** das Hohlprofil (3) einen im Wesentlichen kreisförmigen Querschnitt aufweist.

11. Rumpf eines Luft- oder Raumfahrzeugs,
**dadurch gekennzeichnet,**
**dass** der Rumpf eine Haut (1) und ein Strukturbauteil (10) nach wenigstens einem der vorhergehenden Ansprüche aufweist, welches an der Innenseite der Haut (1) befestigt ist.

## Claims

1. Structural component (10), which is in the form of a load-absorbing component for rigidifying a skin (1) of an aircraft or spacecraft, the structural component (10) comprising a hollow profiled part (3) for receiving at least one system medium (M), the structural component (10) comprising a mounting block (4), which comprises a receiving portion (4d) which is formed to receive the hollow profiled part (3), **characterised in that** the structural component (10) can be attached to the skin (1) by means of the mounting block, the mounting block (4) comprising a foot portion (4a) which can be placed on the skin (1) and attached to the skin (1).

2. Structural component (10) according to claim 1, **characterised in that** the structural component (10) is in the form of a former, in particular an annular former, a stringer, a pressure bulkhead or the like.

3. Structural component (10) according to either claim 1 or claim 2, **characterised in that** the structural component (10) can be attached to an inside of the skin (1) of the aircraft or spacecraft.

4. Structural component (10) according to either claim 2 or claim 3, **characterised in that** the structural component (10) further comprises a clamping bracket (5), by means of which the hollow profiled part (3) is attached to the mounting block (4).

5. Structural component (10) according to any of claims 2 to 4, **characterised in that** the mounting block (4) is made of titanium.

6. Structural component (10) according to at least one of the preceding claims, **characterised in that** the hollow profiled part (3) comprises an opening (8) in the radial direction for introducing and releasing the system medium (M) into and out of the hollow profiled part (3).

7. Structural component (10) according to claim 6, **characterised in that** an adapter (9), to which a line carrying the system medium (M) can be connected, is provided in the opening (8).

8. Structural component (10) according to at least one of the preceding claims, **characterised in that** the system medium (M) is a gas, a liquid, an electric line, a glass fibre cable or the like.

9. Structural component (10) according to at least one of the preceding claims, **characterised in that** the hollow profiled part (3) is made of titanium.

10. Structural component (10) according to at least one of the preceding claims, **characterised in that** the hollow profiled part (3) has a substantially circular cross-section.

11. Fuselage of an aircraft or spacecraft, **characterised in that** the fuselage comprises a skin (1) and a structural component (10) according to at least one of the preceding claims, which is attached to the inside of the skin (1).

## Revendications

1. Composant structural (10), qui est conformé comme un composant supportant des charges pour la rigidification d'une peau (1) d'un aéronef ou d'un astronef, le composant structural (10) comportant un profil creux (3) destiné à recevoir au moins un milieu système (M), le composant structural (10) comportant un chevalet de soutien (4), qui comprend un segment formant logement (4d), lequel est conformé pour loger le profil creux (3), **caractérisé en ce que**, à l'aide du chevalet de soutien, le composant structural (10) peut être fixé à la peau (1), le chevalet de soutien (4) comprenant un segment formant pied (4a), qui peut être mis en place sur la peau (1) et être fixé à la peau (1).

2. Composant structural (10) selon la revendication 1, **caractérisé en ce que** le composant structural (10) est conformé comme un couple, en particulier un couple annulaire, comme une lisse, comme un couple étanche ou analogues.

3. Composant structural (10) selon la revendication 1 ou 2, **caractérisé en ce que** le composant structural (10) peut être fixé à une face intérieure de la peau (1) de l'aéronef ou de l'astronef.

4. Composant structural (10) selon la revendication 2 ou 3, **caractérisé en ce que** le composant structural (10) comprend en outre un étrier (5), à l'aide duquel le profilé creux (3) est fixé au chevalet de soutien (4).

5. Composant structural (10) selon l'une des revendications 2 à 4, **caractérisé en ce que** le chevalet de soutien (4) est fabriqué en titane.

6. Composant structural (10) selon au moins l'une des revendications précédentes, **caractérisé en ce que** le profilé creux (3) comprend une ouverture (8) dans la direction radiale pour introduire le milieu système (M) dans le profilé creux (3) ou l'en évacuer.

7. Composant structural (10) selon la revendication 6, **caractérisé en ce qu'**un adaptateur (9), auquel une conduite faisant passer le milieu système (M) peut être raccordée, est prévu dans l'ouverture (8).

8. Composant structural (10) selon au moins l'une des revendications précédentes, **caractérisé en ce que** le milieu système (M) est un gaz, un liquide, une ligne électrique, un câble à fibres optiques ou analogues.

9. Composant structural (10) selon au moins l'une des revendications précédentes, **caractérisé en ce que** le profilé creux (3) est fabriqué en titane.

10. Composant structural (10) selon au moins l'une des revendications précédentes, **caractérisé en ce que** le profilé creux (3) présente une section transversale essentiellement circulaire.

11. Fuselage d'un aéronef ou d'un astronef, **caractérisé en ce que** le fuselage comprend une peau (1) et un composant structural (10) selon au moins l'une des revendications précédentes, qui est fixé à la face intérieure de la peau (1).
